# EUROPÄISCHE PATENTANMELDUNG

(11) **EP 3 795 522 A1**
(43) Veröffentlichungstag der Anmeldung: **24.03.2021**
(21) Anmeldenummer: 20193447.8
(22) Anmeldetag: 28.08.2020
(51) Int. Cl.: B65H 39/16

(54) **BAHNVERSETZEINRICHTUNG FÜR ETIKETTEN-DRUCKMASCHINEN UND ENTSPRECHENDE ETIKETTEN-VERARBEITUNGSMASCHINEN**

(30) Priorität: 20.09.2019 DE 102019125352
(71) Anmelder: Leising, Bernd, 88213 Ravensburg (DE)
(72) Erfinder: Leising, Bernd, 88213 Ravensburg (DE)
(74) Vertreter: Otten, Roth, Dobler & Partner mbB Patentanwälte

(57) **Zusammenfassung**

Vorgeschlagen wird eine für Etiketten-Druckmaschinen und Etiketten-Verarbeitungsmaschinen vorteilhafte Bahnversetzeinrichtung (1) zum Führen, Separieren, Bearbeiten und Zusammenfügen von wenigstens fünf Bahnen (B1 - B4, BT) zu einem Bahnenstapel (C), wobei die Bahnen (in einer Ausgangsbahn (A) einteilig zusammenhängen parallel zueinander angeordnet sind, wobei wenigstens vier der Bahnen ein mit Kleber beschichtetes Obermaterial und einen darauf angebrachten Silikonträger (ST) umfassen und wenigstens eine der Bahnen als Trägerbahn (BT) ausgebildet ist, mit einer Längsschneideinheit (2), mit wenigstens einer Umlenkeinheit (3.0 - 3.10, 7) zum Umlenken der Bahnen, wobei wenigstens zwei Wendestangen (4.1-4.3) vorgesehen sind, wobei jede der Wendestangen wenigstens eine der Bahnen zugeordnet ist, um die jeweilige Bahn über die entsprechende Wendestange zu führen, unter Änderung der Transportrichtung gegenüber der ersten Transportrichtung (TR1) umzulenken und den Silikonträger (ST) vom Obermaterial zu trennen, wobei eine Verpressstation (6) vorgesehen ist, um alle Bahnen gestapelt zu verpressen.

## Beschreibung

Die Erfindung betrifft eine Bahnversetzeinrichtung zum Führen, Separieren, Bearbeiten und Zusammenfügen von Bahnen zu einem Bahnstapel für Etiketten-Druckmaschinen und Etiketten-Verarbeitungsmaschinen.

Aus dem Stand der Technik ist beispielsweise aus der EP 0 635 365 A1 eine Rotationsdruckmaschine mit einer Bahnversetzeinrichtung bekannt.

Aufgabe der Erfindung ist es, eine Bahnversetzeinrichtung bereitstellen zu können, die den immer höheren Anforderungen bei der Herstellung anspruchsvoller Multilabel-Produkte wie Booklet-Etiketten, Sandwich-Etiketten oder Sonderetiketten bis hin zu Broschüren und Prospekten, Flyern usw. gerecht wird.

Die Aufgabe wird, ausgehend von einer der eingangs genannten Art, durch die Merkmale des Anspruchs 1 gelöst.

Durch die in den abhängigen Ansprüchen genannten Maßnahmen sind vorteilhafte Ausführungen und Weiterbildungen der Erfindung möglich.

Die erfindungsgemäße Bahnversetzeinrichtung zum Führen, Separieren, Bearbeiten und Zusammenfügen wird im Zusammenhang mit Etiketten-Druckmaschinen und Etiketten-Verarbeitungsmaschinen verwendet. Sie zeichnet sich dadurch aus, dass Multilabel-Produkte, insbesondere Multilabel-Etiketten, bestehend aus einem Bahnstapel von wenigstens fünf Bahnen hergestellt werden können. Das Ausgangsmaterial, das zu dem Bahnstapel bzw. zu Etiketten verarbeitet werden soll, besteht aus einer Ausgangsbahn, die zunächst einteilig ausgebildet ist. Die späteren Bahnen sind bereits Teil dieser Ausgangsbahn und dort parallel angeordnet, hängen aber noch zusammen und müssen in der Folge getrennt werden.

Eine typische Anwendung für eine derartige Etiketten-Druckmaschine und Etiketten-Verarbeitungsmaschine besteht darin, spezielle Etiketten-Varianten herzustellen. Es ist üblich geworden, dem Verbraucher auf Produkten vielfältige Informationen anhand zu geben. Während dies oftmals nur möglich war, indem das Produkt in einer zusätzlichen Verpackungsschachtel bereitgestellt wurde, sodass in die Schachtel ein entsprechendes Booklet, ein Faltzettel oder dergleichen gelegt werden konnte, werden nun unterdessen diese Informationen zum Teil unmittelbar auf das Produkt bzw. bei Flüssigkeiten dessen formgebende Verpackung, etwa eine Flasche, ein Behälter oder dergleichen aufgebracht. Damit dies nicht dazu führt, dass die Informationen unübersichtlich erscheinen, und weil oftmals auch die Oberfläche gar nicht ausreicht, um sämtliche Informationen dort unterzubringen, werden entsprechende Multilabel-Etiketten vorteilhafterweise direkt auf das Produkt, die Flasche, den Behälter oder dergleichen aufgebracht.

Diese Multilabel-Etiketten hängen in der Regel zusammen und können durchgeblättert werden, d.h. sie bestehen aus mehreren Lagen, die voneinander abgezogen und somit getrennt angeschaut werden können. Diese Lagen bilden somit Seiten eines Booklets. Durch eine spezielle Klebebeschichtung können die Seiten jedoch aneinanderhaften, sodass das Multilabel-Etikett, wie auch ein Etikett aus einer Lage, an der Flasche haftet und entsprechend dünn und ohne abstehende Seiten ausgebildet sein kann. Der Kleber ermöglicht ein relativ einfaches Ablösen der Lagen voneinander, die Seiten können aber auch wieder haftend übereinandergelegt werden. Zum Teil ist die Anbringung derartiger Etiketten auch notwendig, weil zum Beispiel Vorschriften bestehen, dass Gebrauchs- oder Sicherheitsanweisungen in mehreren Sprachen abgedruckt sein müssen. Mittlerweile werden auch kleinere Broschüren, Prospekte oder Flyer zum Teil in dieser Form von Multilabel-Etiketten hergestellt, um diesen durch die Stapelung mit aneinander klebenden Seiten eine eigene Note zu verleihen.

Dementsprechend ist die erfindungsgemäße Bahnversetzeinrichtung dazu aus gebildet, wenigstens fünf Bahnen zu einem Bahnstapel und somit zu einem Multilabel-Etikett zusammenzufügen. Wie bereits dargestellt sind diese Bahnen parallel nebeneinander in Form einer Ausgangsbahn angeordnet. In der Regel sind nicht nur einige, sondern meistens alle Bahnen mit Kleber beschichtet, um später befestigt bzw. aneinanderhaften und übereinander gestapelt werden zu können. Die Klebeschicht wiederum wird beim Ausgangsmaterial durch einen Silikonträger geschützt, der während der Verarbeitung bzw. während des Durchlaufs durch die Bahnversetzeinrichtung abgezogen werden muss. Wenigstens eine der Bahnen ist als Trägerbahn ausgebildet.

Im ersten Verarbeitungsschritt kann bei der Bahnversetzeinrichtung in der Regel ein Auftrennen der Bahnen aus der Ausgangsbahn mittels einer Längsschneideinheit erfolgen, die hier zum Schneiden und Auftrennen der Ausgangsbahn in die wenigstens fünf Bahnen ausgebildet ist. Die Bahnversetzeinrichtung führt die jeweiligen Bahnen wenigstens abschnittsweise über unterschiedliche Transportwege, um sie schließlich nicht mehr parallel nebeneinander, sondern gestapelt als Multilabel-Stapel übereinander zu platzieren. Die Bahnen, die zunächst in Form einer Ausgangsbahn noch zusammenhängen, werden aufgetrennt, je nach Art der Bahn gegebenenfalls bearbeitet, indem zum Beispiel ein Silikonträger zum Abdecken einer Klebeschicht entfernt wird, und wieder zusammengeführt, jedoch nicht nebeneinander, sondern als Stapel übereinandergeschichtet. Die Transportwege verlaufen also zwischen dem Zeitpunkt, zu dem noch das Ausgangsmaterial vorliegt, und dem Zeitpunkt, zu dem Bahnen bzw. alle Bahnen wieder zusammengefügt werden, jeweils zumindest teilweise unterschiedlich; auf den Transportwegen müssen die Bahnen so gelenkt werden, dass sie schließlich wieder präzise übereinander gebracht werden können.

Zum Teil können Transportwege aber auch für einzelne Bahnen gemeinsam verlaufen, wenn zum Beispiel zwei oder mehrere Bahnen als Stapel bzw. Teilstapel zusammengeführt, übereinander geschichtet und weiter verarbeitet werden.

Sind die Bahnen aus der Ausgangsbahn aufgetrennt, können sie über sogenannte Umlenkeinheiten jeweils auf unterschiedliche Transportwege gebracht werden. Umlenkeinheiten können beispielsweise in der Form von Umlenkrollen vorliegen, welche die Bahn dann abstützen und von denen aus die Bahnen in unterschiedliche Richtungen mit unterschiedlichen Winkeln sodann abgelenkt werden können. Auf diese Art und Weise können die Bahnen räumlich separiert werden.

Zunächst wird eine erste Transportrichtung gewissermaßen als Hauptrichtung in der Bahnversetzeinrichtung definiert. In dieser Richtung werden die aufgetrennten im Anschluss an die Längsschneideinheit Bahnen nach einer Aufteilung in zumindest teilweise unterschiedliche Transportwege über die Umlenkeinheiten weitergeleitet, insbesondere parallel zueinander versetzt.

Den Bahnen, die mit einem Silikonträger versehen ist, sind Wendestangen zugeordnet. Es können auch zwei Bahnen über eine gemeinsame Wendestange geführt werden. Eine derartige Wendestange kann beispielsweise nicht drehend ausgebildet sein, jedoch einen Winkel von beispielsweise 45° zur Transportrichtung ausbilden. Diese Wendestange kann, im Unterschied zu den Umlenkrollen bzw. Umlenkeinheiten, fest stehen (also statisch ausgebildet sein und sich nicht mit der laufenden Bahn mitdrehen). Zunächst einmal kann jede Bahn über die Wendestange auch in eine andere Transportrichtung bzw. auf einen anderen Transportweg geleitet werden. Eine Wendestange ermöglicht jedoch auch das Entfernen bzw. Abziehen des Silikonträgers, d.h. anschließend können die Bahnen grundsätzlich mit der unbedeckten Klebeschicht zusammengefügt werden, sodass diese aneinanderhaften. Diese Wendestange kann jeweils wenigstens einer Umlenkeinheit nachgeschaltet sein.

Schließlich umfasst die Bahnversetzeinrichtung wenigstens eine Verpressstation, um alle Bahnen übereinandergestapelt miteinander zu verbinden und somit schließlich das Multilabel-Produkt bzw. den Bahnstapel auszubilden. Denkbar ist, die Einzelbahnen in der Verpressstation miteinander zu verpressen oder zuvor aus einzelnen Bahnen Teilstapel zu bilden und lediglich Teilstapel oder stattdessen Teilstapel und Einzelbahnen zu verpressen.

Im Anschluss an eine derartige Bahnversetzeinrichtung kann eine Etiketten-Druckmaschine und Etiketten-Verarbeitungsmaschine erfindungsgemäß auch noch weitere Verarbeitungseinheiten umfassen, zum Beispiel eine Stanzvorrichtung, mit der die Bahnstapel durch Stanzen in ihre endgültige Form gebracht werden.

Grundsätzlich können die Umlenkeinheiten verschieden ausgebildet sein. Um jedoch die Bahn auf unterschiedliche Transportwege oder in Transportrichtungen abzulenken, können vorteilhafterweise Umlenkrollen gemäß einem Ausführungsbeispiel der Erfindung eingesetzt werden. Im Allgemeinen besteht eine Schwierigkeit bei einer Bahnversetzeinrichtung auch darin, die einzelnen Bahnen entlang ihrer Längsausrichtung auch wohldefiniert übereinander zu stapeln. Dies ist insbesondere dann der Fall, wenn entlang einer Bahn nicht wiederkehrend immer nur der gleiche Etikettenabschnitt sich wiederholt, sondern die Bahn aus einer Aneinanderreihung unterschiedlicher Etikettenabschnitte besteht. In diesem Fall ist es besonders wichtig, dass die Bahnen so übereinander gestapelt werden, dass die Etikettenabschnitte, die übereinander gebracht und gestapelt werden, korrekt einander zugeordnet sind. Ein zu einer Abweichung von dieser Zuordnung führender Versatz einer Bahn entlang ihrer Länge könnte dementsprechend zur Folge haben, dass das gebildete Etikett bzw. der gebildete Bahnstapel nicht mehr verwendet werden kann, weil die Zusammenstellung der Seiten nicht passt. Somit sind auch alle Etiketten in diesem entsprechenden Bahnstapel gegebenenfalls unbrauchbar. Um dies zu vermeiden, ist es somit notwendig, den Transportweg einer Bahn hinsichtlich seiner Länge einstellen zu können. Dies kann grundsätzlich über die Verschiebung einer Umlenkeinheit bzw. eine Umlenkungsrolle realisiert werden, da sich der Transportweg entsprechend verkleinern oder vergrößern kann. Im Übrigen kann auch die Spannung einer Bahn beim Durchlaufen der Bahnversetzeinrichtung angepasst werden, indem die Stellung der Umlenkrolle verändert wird. Somit kann die Zugkraft auf die Bahn in vergleichsweise einfacher Art und Weise angepasst werden.

Um das Zusammenführen der einzelnen, bereits anfangs aufgetrennten Bahnen zu vereinfachen, ist es denkbar, wenigstens eine Zusammenführeinheit zur Zusammenführung von wenigstens zwei Bahnen bereitzustellen, die vorab, d.h. vor der Verpressstation einen Teilstapel bildet. Auf diese Art und Weise kann auch die Genauigkeit verbessert werden, weil nicht alle Bahnen relativ zueinander ausgerichtet werden müssen, sondern an dieser Stelle freilich nur diejenigen, die zu dem Teilstapel zusammengefügt werden. Es wird somit auch ermöglicht, die Einstellung der Genauigkeit zu vereinfachen, indem derartige Teilstapel gebildet werden, deren Bahnen jeweils zueinander versetzt werden können. Demzufolge können auch enge Toleranzgrenzen bei der Herstellung eingehalten werden.

Wie bereits dargestellt, kann bei einer Ausführungsform der Erfindung die Bahnversetzeinrichtung so ausgebildet sein, dass eine Bahn, insbesondere die Trägerbahn so transportiert wird, dass deren Normale stets in einer Ebene, die hier als erste Ebene bezeichnet wird, verläuft. Die Normale stellt eine gedachte, auf der Bahnfläche senkrecht stehende Linie dar, welche also die Lage und Ausrichtung der Bahn beschreibt. Mithilfe der Wendestangen jedoch können bei einer Ausführungsform die Bahnen umgelenkt werden, dass deren Normale aus der ersten Ebene herausgelenkt wird.

Bei einem Führen einer Bahn über eine Umlenkrolle bleibt deren Normale in der Regel in derselben Ebene.

Die Wendestangen können gleichzeitig dazu dienen, Träger bzw. im Speziellen z.B. den Silikonträger zum Abdecken der Klebeschicht von der Bahn zu trennen und somit die weitere Bearbeitung zu ermöglichen, z.B. das Zusammenfügen zu einem Stapel aus aneinander haftenden Abschnitten.

In besonders vorteilhafter Weise kann eine Wendestange mit einer Seitenversatzeinrichtung versehen sein. Die Wendestange ist in einem bestimmten Winkel zur vorliegenden Transportrichtung der Bahn, die auf die Wendestange geführt wird, ausgerichtet. Wird die Wendestange in ihrer Position versetzt, so wird nach dem Umlenken der Bahn diese ebenfalls seitlich versetzt, da durch das Verschieben der Wendestange eine Parallelverschiebung der umgelenkten Bahn erfolgt. Um die Bahn auf einen anderen Transportweg zu führen bzw. in eine andere Transportrichtung zu lenken, können grundsätzlich auch Wendestangen zu diesem Zweck genutzt werde, und nicht nur Umlenkrollen. Die Wendestange ist jedoch mit zusätzlicher Funktionalität ausgestattet und wird etwa zum Abziehen des Silikonträgers genutzt. Zum Beispiel ist es denkbar, zwei oder mehr nebeneinander angeordnete Bahnen umzulenken, indem für jede Bahn eine Wendestange in der Transportrichtung hintereinander versetzt angeordnet sind, d.h. die Bahnen werden an unterschiedlichen Orten zu unterschiedlichen Zeiten auf einen anderen Transportweg gebracht. Gleichzeitig können sodann die Silikonträgerschicht entfernt werden. Diese Maßnahme kann zu Platzeinsparungen führen. Es kann auch auf zusätzliche Umlenkrollen verzichtet werden, d.h. es können Kosten eingespart werden. Denkbar ist auch, entsprechende Wendestangen in einer Richtung senkrecht zur ersten Transportrichtung versetzt zueinander anzuordnen, um Bahnen auf andere Transportwege bzw. in andere Transportrichtungen umzulenken.

Bei einer besonders bevorzugten Weiterbildung der Erfindung umfasst eine der Wendestangen eine Ummantelungsschicht aus porösem Material, sodass durch die Poren dieses Materials ein Luftstrom hindurch geleitet werden kann. Grundsätzlich kann entweder eine Ansaugvorrichtung zum Anlegen eines Unterdrucks vorgesehen sein, damit die zu transportierende Bahn angesaugt und lösbar gehalten wird. Hieraus resultiert insbesondere der Vorteil, dass die Zugkraft zum Transport sehr gut angepasst werden kann, indem die Wendestange entsprechend versetzt bzw. indem die Ansaugkraft durch Änderung des Unterdrucks angepasst wird. Umgekehrt wiederum kann auch eine Druckluftvorrichtung zum Anlegen eines Drucks vorgesehen sein, damit zwischen der transportierten Bahn und der Ummantelungsschicht ein Luftpolster entsteht. Die Ausbildung eines Luftpolsters durch Druckluft stellt in der Regel die für Etiketten-Druckmaschinen und Etiketten-Verarbeitungsmaschinen relevante Anwendung dar. Somit kann über die Wendestange selbst eine Bahn mit einer unbedeckten Klebeschicht (die der Wendestange zugewandt ist) geleitet werden, ohne dass die Klebeschicht an der Ummantelungsschicht der Wendestange haften bleibt. Das Umleiten über die Wendestange erfolgt sodann im Wesentlichen reibungsfrei und ist unabhängig von der Oberflächenbeschaffenheit der jeweiligen Bahn realisierbar.

Bei einer Ausführungsform kann ferner die Längsschneideinheit dazu ausgebildet sein, mindestens zwei Bahnen mit jeweils unterschiedlicher Breite zu schneiden, was insbesondere von Vorteil ist, wenn das Multilabel-Produkt ein Register aufweisen soll, also Seitenränder zum Teil sich nicht überdecken, um ein Auffinden einer bestimmten Stelle im Stapel zu erleichtern. Eine spätere Bearbeitung eines gestapelten Produktes, die sich wesentlich schwieriger gestalten würde, ist sodann nicht notwendig.

Um eine platzsparende Aufteilung auf die einzelnen Transportwege zu ermöglichen, kann die erste Umlenkeinheit dazu vorgesehen sein, die längs geschnittene Ausgangsbahn auf unterschiedlichen Transportwegen so aufzuteilen, dass zunächst zum Beispiel einem Transportweg mindestens zwei Bahnen zugeordnet werden und auf einem anderen Transportweg die übrigen (z.B. drei) Bahnen zunächst weitergeleitet werden. Eine weitere Aufteilung kann im Anschluss erfolgen. Insgesamt kann Platz eingespart werden, da nicht gleich hinter der Längsschneideinheit getrennte Wege für fünf oder mehr Bahnen bereitgestellt werden müssen.

Es hat das besonders vorteilhaft raus gestellt, die Bahnversetzeinrichtung so aufzuteilen, dass in der ersten Ebene etwa ein quadratischer Aufbau hinsichtlich der Größenverhältnisse vorliegt.

### Ausführungsbeispiel

Ein Ausführungsbeispiel der Erfindung ist in der Zeichnung dargestellt und wird nachstehend unter Angabe weiterer Einzelheiten und Vorteile näher erläutert. Im Einzelnen zeigt:

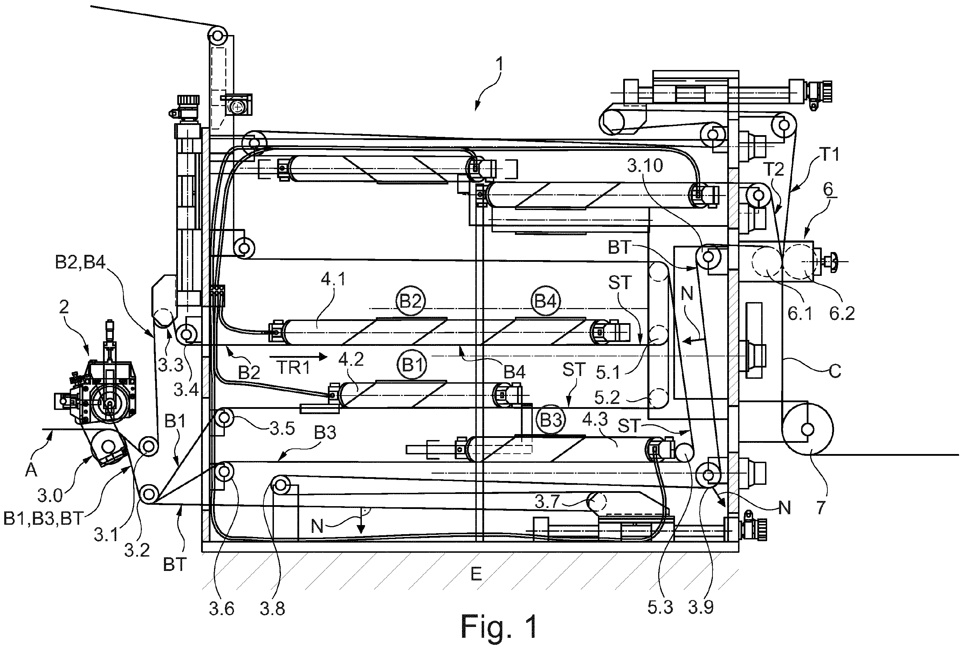

- Fig. 1:: eine schematische Darstellung eines Ausschnitts einer Bahnversetzeinrichtung gem. der Erfindung.

Figur 1 zeigt eine schematische Darstellung einer Bahnversetzeinrichtung 1 als Teil einer Etiketten-Druckmaschine und Etiketten-Verarbeitungsmaschine mit einer Längsschneideinheit 2 sowie zahlreichen um Lenkeinheiten in Form von um Lenkrollen 3.1,3.2, ..., 3.10 Die Ausgangsbahn A wird mittels der Längsschneideinheit 2 in (Einzel-) Bahnen B1, B2, B3, B4, BT geschnitten. Diese einzelnen Bahnen B1 bis B4 und BT verlaufen als Streifen entlang der Längsrichtung der Ausgangsbahn A. Die Bahn BT ist die Trägerbahn.

Hinter der Umlenkrolle 3.0 werden zwei Bahnen B2, B4 in einem anderen Winkel abgelenkt als die weiteren drei Bahnen B1, B3, B5. Die beiden Bahnen B2, B4 werden über die Umlenkrolle 3.1 zunächst senkrecht zur ersten Transportrichtung TR1 auf einen eigenen Transportweg gelenkt. Die restlichen drei Bahnen B1, B3, BT werden über die Umlenkrolle 3.2 weitergeführt und hinter der Umlenkrolle 3.2 in drei verschiedene Richtungen aufgeteilt. Mit Hilfe der Umlenkrollen 3.3 und 3.4 erhalten die Bahnen B2, B4 eine Ablenkung in die erste Transportrichtung TR1. Die weiteren Bahnen B1, B3, BT werden hinter den Umlenkrollen 3.5 bzw. 3.6 in die Transportrichtung TR1 gelenkt.

Die Trägerbahn BT wird nicht über eine Wendestange geführt, sondern nur über Umlenkrollen, hier die Umlenkrollen 3.7, 3.8, 3.9, 3.10 nach der Umlenkrolle 3.2. Die Normale N der Trägerbahn BT bleibt also in auf diesem Transportweg in der ersten Ebene E. Durch Verschieben, insbesondere der Umlenkrollen 3.7 bis 3.10 kann somit die Länge des Transportwegs eingestellt werden.

Die Bahnen B1 bis B4 gelangen hinter den entsprechenden Umlenkrollen 3.4, 3.5, 3.6 zu den Wendestangen 4.1, 4.2, 4.3, welche im Winkel von 45° zur ersten Transportrichtung TR1 und im Winkel von 45° zur ersten Ebene E verlaufen. Die Bahnen B2, B4 werden auf eine gemeinsame Wendestange 4.1 geführt, aber seitlich versetzt zueinander auf unterschiedliche Transportwege umgelenkt, sodass die Bahnen in eine Richtung 90° zur ersten Transportrichtung TR1 weiterlaufen.

Analog werden die Bahnen B1 und B3 um 90° zur ersten Transportrichtung TR1 umgelenkt und weitergeführt, wobei allerdings jeder Bahn B1, B3 eine eigene Wendestange 4.2 bzw. 4.3 zugeordnet ist. Bei jeder der Wendestangen 4.1, 4.2, 4.3 wird der Silikonträger ST abgelöst und über Umlenkeinheiten 5.1, 5.2, 5.3 weitergeleitet und entfernt, z.B. auf einer Sammelrolle aufgerollt.

Die nach dieser Bahnführung übereinander (in einer Richtung senkrecht zur Transportrichtung TR1) stehenden Bahnen B1, B2 werden in einer Zusammenführungseinheit zu einem Teilstapel T1 übereinandergelegt. Analog wird aus den Bahnen B3, B4 ein Teilstapel T2 über eine Zusammenführungseinheit gebildet.

Der Gesamtstapel C aus allen fünf Bahnen B1 bis B4, BT wird schließlich durch die nachgeschaltete Verpressstation 6 gebildet, welche die Bahnen B1 bis B4, BT, bzw. genauer gesagt die Trägerbahn BT mit den Teilstapeln T1, T2 zwischen zwei gegenläufigen Rollen 6.1, 6.2 miteinander verpresst.

Der Bahnstapel C kann über die Umlenkrolle 7 z.B. an eine Stanzvorrichtung zur weiteren Bearbeitung geleitet werden.

### Bezugszeichenliste:

- 1: Bahnversetzeinrichtung
- 2: Längsschneideinheit
- 3.0: Umlenkrolle
- 3.1: Umlenkrolle
- 3.2: Umlenkrolle
- 3.3: Umlenkrolle
- 3.4: Umlenkrolle
- 3.5: Umlenkrolle
- 3.6: Umlenkrolle
- 3.7: Umlenkrolle
- 3.8: Umlenkrolle
- 3.9: Umlenkrolle
- 3.10: Umlenkrolle
- 4.1: Wendestange
- 4.2: Wendestange
- 4.3: Wendestange
- 5.1: Umlenkeinheit zum Abtransport des Silikonträgers
- 5.2: Umlenkeinheit zum Abtransport des Silikonträgers
- 5.3: Umlenkeinheit zum Abtransport des Silikonträgers
- 6: Verpressstation
- 6.1: Rolle der Verpressstation
- 6.2: Rolle der Verpressstation
- 7: Umlenkrolle
- A: Ausgangsbahn
- B1: Bahn
- B2: Bahn
- B3: Bahn
- B4: Bahn
- BT: Bahn
- C: Bahnstapel
- E: erste Ebene
- N: Normale
- ST: Silikonträger
- T1: Teilstapel
- T2: Teilstapel
- TR1: erste Transportrichtung

## Patentansprüche

1. Bahnversetzeinrichtung (1) zum Führen, Separieren, Bearbeiten und Zusammenfügen von wenigstens fünf Bahnen (B1, B2, B3, B4, BT) zu einem Bahnenstapel (C), wobei die Bahnen (B1, B2, B3, B4, BT) in einer Ausgangsbahn (A) einteilig zusammenhängen parallel zueinander angeordnet sind, wobei wenigstens vier der Bahnen ein mit Kleber beschichtetes Obermaterial und einen darauf angebrachten Silikonträger (ST) umfassen und wenigstens eine der Bahnen als Trägerbahn (BT) ausgebildet ist,
• mit einer Längsschneideinheit (2) zum Schneiden und Auftrennen der Ausgangsbahn (A) in wenigstens fünf Bahnen (B1, B2, B3, B4, BT),
• wobei die Bahnversetzeinrichtung dazu ausgebildet ist, die Bahnen wenigstens abschnittsweise über unterschiedliche Transportwege zu führen und wieder gestapelt zusammenzubringen,
• mit wenigstens einer Umlenkeinheit (3.0, 3.1, 3.2, 3.3, 3.4, 3.5, 3.6, 3.7, 3.8, 3.9, 3.10, 7) zum Umlenken der Bahnen (B1, B2, B3, B4, BT), wobei die Umlenkeinheit oder wenigstens eine der Umlenkeinheiten zum Separieren der Bahnen auf jeweils wenigstens zwei unterschiedliche Transportwegen ausgebildet ist, wobei die wenigstens eine Umlenkeinheit der Längsschneideinheit nachgeschaltet ist,
• wobei die Umlenkeinheit oder wenigstens eine der Umlenkeinheiten (3.2, 3.4, 3.5, 3.6) dazu ausgebildet ist, die Bahnen in einer ersten Transportrichtung (TR1) weiterzuleiten,
• wobei wenigstens zwei Wendestangen (4.1, 4.2, 4.3) vorgesehen sind, die jeweils der wenigstens einen Umlenkeinheit und/oder wenigstens einer der Umlenkeinheiten (3.0, 3.1, 3.2, 3.3, 3.4, 3.5, 3.6) nachgeschaltet sind, wobei jeder der Wendestangen wenigstens eine der Bahnen (B1, B2, B3, B4) zugeordnet ist, um die jeweilige Bahn über die entsprechende Wendestange zu führen, unter Änderung der Transportrichtung gegenüber der ersten Transportrichtung (TR1) umzulenken und den Silikonträger (ST) vom Obermaterial zu trennen,
• wobei eine Verpressstation (6) vorgesehen ist, um alle Bahnen (B1, B2, B3, B4, BT) übereinander gestapelt miteinander zu verpressen.

2. Bahnversetzeinrichtung (1) nach Anspruch 1, **dadurch gekennzeichnet, dass** die Umlenkeinheit oder wenigstens eine der Umlenkeinheiten (3.0, 3.1, 3.2, 3.3, 3.4, 3.5, 3.6, 3.7, 3.8, 3.9, 3.10, 7) eine Umlenkrolle umfasst.

3. Bahnversetzeinrichtung (1) nach einem der vorgenannten Ansprüche, **dadurch gekennzeichnet, dass** wenigstens eine Zusammenführeinheit zum Zusammenführen von wenigstens zwei der Bahnen vorgesehen ist, wobei die Verpressstation (6) der wenigstens einen Zusammenführeinheit nachgeschaltet und dazu ausgebildet ist, vor der Verpressstation (6) jeweils wenigstens einen Teilstapel (T1, T2) von wenigstens zwei Bahnen zu bilden.

4. Bahnversetzeinrichtung (1) nach einem der vorgenannten Ansprüche, **dadurch gekennzeichnet, dass**
• die Bahnversetzeinrichtung (1) dazu ausgebildet ist, eine der Bahnen, insbesondere die Trägerbahn (BT), so zu transportieren, dass deren Normale (N) in einer ersten Ebene (E) verläuft, und
• die Wendestangen (4.1, 4,2, 4.3) dazu ausgebildet sind, die entsprechenden Bahnen jeweils so umzulenken, dass deren Normalen aus der ersten Ebene (E) heraus gelenkt werden.

5. Bahnversetzeinrichtung (1) nach einem der vorgenannten Ansprüche, **dadurch gekennzeichnet, dass** wenigstens eine der Wendestangen (4.1, 4.2, 4.3), insbesondere die Wendestangen mit einer Seitenversatzeinrichtung versehen ist/sind, um den Seitenversatz beim Führen der jeweiligen Bahn (B1, B2, B3, B4) einzustellen.

6. Bahnversetzeinrichtung (1) nach einem der vorgenannten Ansprüche, **dadurch gekennzeichnet, dass** wenigstens eine Trägerbahn-Rolle (3.3, 3.4, 3.5, 3.6, 3.7, 3.8, 3.9, 3.10) zum Führen der Trägerbahn und zur Änderung der Transportrichtung, ohne dass die Normale (N) der Trägerbahn (BT, D3) aus der ersten Ebene (E) herausgeführt wird, vorhanden ist, wobei eine Längenversatz-Einrichtung zur Einstellung der Transportstrecke, welche die Trägerbahn durchläuft, und zum Versetzen der Trägerbahn-Rolle (3.3, 3.4, 3.5, 3.6, 3.7, 3.8, 3.9, 3.10) ausgebildet ist.

7. Bahnversetzeinrichtung (1) nach einem der vorgenannten Ansprüche, **dadurch gekennzeichnet, dass**
• wenigstens zwei der Wendestangen in Richtung der ersten Transportrichtung versetzt zueinander angeordnet sind, um die jeweiligen Bahnen entsprechend zueinander versetzt umzulenken und/oder
• wenigstens eine der Wendestangen (4.1) dazu ausgebildet und/oder angeordnet ist, dass wenigstens zwei der Bahnen (B2, B4) über diese Wendestange umgelenkt werden und/oder der jeweilige Silikonträger von den Bahnen abgezogen wird.

8. Bahnversetzeinrichtung (1) nach einem der vorgenannten Ansprüche, **dadurch gekennzeichnet, dass** wenigstens zwei der Wendestangen in einer Richtung senkrecht zur ersten Transportrichtung versetzt zueinander angeordnet sind, um die jeweiligen Bahnen entsprechend zueinander versetzt umzulenken.

9. Bahnversetzeinrichtung (1) nach einem der vorgenannten Ansprüche, **dadurch gekennzeichnet, dass** wenigstens eine der Wendestangen (4.1, 4.2, 4.3) eine Ummantelungsschicht aus einem porösen Material umfasst, um einen Luftstrom hindurchleiten zu können, wobei eine Ansaugvorrichtung zum Anlegen eines Unterdrucks vorgesehen ist, um die zu transportierende Bahn anzusaugen und lösbar zu halten, sodass eine Zugkraft zum Transport ausgeübt werden kann.

10. Bahnversetzeinrichtung nach einem der vorgenannten Ansprüche, **dadurch gekennzeichnet, dass** wenigstens eine der Wendestangen (4.1, 4.2, 4.3) eine Ummantelungsschicht aus einem porösen Material umfasst, um einen Luftstrom hindurchleiten zu können, wobei eine Druckluftvorrichtung um Anlegen eines Drucks vorgesehen ist, um die zu transportierende Bahn über ein Luftpolster zu führen.

11. Bahnversetzeinrichtung (1) nach einem der vorgenannten Ansprüche, **dadurch gekennzeichnet, dass** die Längsschneideinheit (2) dazu ausgebildet ist, wenigstens zwei Bahnen (B1, B2, B3, B4, BT) mit unterschiedlicher Breite durchzuschneiden.

12. Bahnversetzeinrichtung (1) nach einem der vorgenannten Ansprüche, **dadurch gekennzeichnet, dass** eine erste Umlenkeinheit (3.0, 3.1, 3.2) vorgesehen ist, um die längs geschnittene Ausgangsbahn auf unterschiedlichen Transportwegen so aufzuteilen, dass auf einem Transportweg wenigstens zwei und auf einem anderen Transportweg wenigstens drei Bahnen geführt werden.

13. Etiketten-Druckmaschine und/oder Etiketten-Verarbeitungsmaschine mit einer Bahnversetzeinrichtung (1) nach einem der vorgenannten Ansprüche, insbesondere mit einer der Bahnversetzeinrichtung (1) nachgeschalteten Bearbeitungsvorrichtung, insbesondere einer Stanzvorrichtung zum Stanzen des Bahnstapel (C).
